# EUROPEAN PATENT SPECIFICATION

(11) **EP 3 026 315 B1**
(45) Date of publication and mention of the grant of the patent: **08.11.2017**
(21) Application number: 15194586.2
(22) Date of filing: 13.11.2015
(51) Int. Cl.: F16L 3/10, F16B 37/04, F16B 41/00

(54) **PIPE CLIP WITH SCREW RETAINER**
ROHRSCHELLE MIT SCHRAUBENHALTERUNG
COLLIER DE SERRAGE POUR TUYAUX AVEC DISPOSITIF DE RETENUE DE VIS

(30) Priority: 25.11.2014 NL 2013873
(43) Date of publication of application: 01.06.2016
(73) Proprietor: J. van Walraven Holding B.V., 3641 RK Mijdrecht (NL)
(72) Inventor: NIJDAM, Frank, 3891 CZ Zeewolde (NL); JUZAK, Marek, 3641 ZS Mijdrecht (NL)
(74) Representative: EP&C

(56) References cited:
- EP-A1- 0 567 821
- EP-A1- 2 690 338
- EP-A2- 0 671 579
- WO-A1-95/11403
- WO-A1-2007/024326
- DE-A1- 3 639 774
- DE-B- 1 171 209

## Description

The present invention relates to a pipe clip comprising a substantially annular metal pipe clip body, said pipe clip body having a first flange and a second flange opposing the first flange, and a tightening screw associated with said first and second flanges to tighten said flanges towards each other, said tightening screw having a head and a threaded shank, said first flange in a closed state of the pipe clip being engaged by said head and having a through hole with a smaller diameter than the screw head, wherein said threaded shank passes through said through hole, and said second flange having a female fastening element to cooperate with said threaded shank, and said pipe clip including a screw pre-assembly retainer to retain the screw relative to said first flange.

In a known embodiment of pipe clip with a screw pre-assembly retainer, the screw pre-assembly retainer is a ring made of plastic or rubber. This ring is arranged around the threaded shank of the screw. It prevents that the shank can be fully retracted from the through hole in the first flange when the threaded shank is disengaged from the second flange, and as such functions as an anti-loss ring. A ring as mentioned above can also function as a distance ring. It allows to retain the head near the first flange, such that when the threaded shank is not advanced entirely in the second flange, the first flange and second flange are kept spaced apart. This is mainly useful when the pipe clip has two pipe clip halves, wherein the halves at one side have a first flange and second flange and are attached by a tightening screw as described in the above. On the other side the pipe clip halves each have a flange, which flanges are connected by a second tightening screw after the pipe clip is arranged around the pipe. The fact that the first flange and second flange are kept spaced apart allows that the pipe clip can conveniently be hinged open.

The retaining ring mentioned above is not a very secure means to retain the screw in a fixed position with respect to the first flange. The ring can inadvertently shift over the shank of the screw, for example because an inner diameter of the ring is not well adapted to the diameter of the threaded shank. Thus the distance between the first and second flange may not be retained and a proper hinge function on that side of the pipe clip may be lost.

WO 2007/024326 describes a retention element formed as an O-ring that engages the shank of the fastening element of a pipe clip. This retention element holds the shank at a predetermined position, such that it cannot escape from the pipe clip assembly.

WO 95/11403 describes a curved portion on both the first and the second flange. The curved portion on the first flange receives the head of the fastening means while the curved portion of the second flange receives the nut of the fastening means.

EP 2690338 uses a spring-like element at the inner side of the first flange, where the shank is received. This spring-like element prevents the loss of the screw.

EP 0567821 discloses a pipe clip with a securing element in the form of a thin rubber ring in order to prevent loss of the screw. The rubber ring is attached to the second flange, where the threaded portion of the screw is received.

The invention has for an object to provide an alternative pipe clip.

This object is achieved by a pipe clip according to the preamble of claim 1, wherein said screw pre-assembly retainer comprises a base portion and at least one screw head embracing portion attached to said base portion, said base portion being connected to a lateral edge of the first flange and said head embracing portion embracing at least a portion of the screw head so as to restrain axial movement of the screw head away from the first flange.

The screw pre-assembly retainer captures the head of the screw and blocks the movement of the head of the screw away from the first flange. The head cannot escape from the head embracing portion whereby it is warranted that the screw will not be lost when its shank is disengaged from the second flange.

Moreover, the screw head is held against or in the vicinity of the first flange, such that the distance between the head and the portion where the screw shank engages the second flange is kept as large as possible. Thereby the hinge function of the pipe clip at the side where the first and second flange are located, is facilitated.

In a practical embodiment of the pipe clip according to the invention, the head embracing portion is a cap that extends over the screw head and is provided with a passage through which the screw head can be reached with a tool such as a screwdriver or a drill bit in order to tighten or untighten the tightening screw.

The cap may be dome shaped. The cap may alternatively be formed as a canopy that is only connected on one end thereof to said base portion.

The passage in the cap is in a possible embodiment a hole with a closed contour (provided in line with the longitudinal axis of the screw). In another possible embodiment the passage is a slot-like recess with an open end in it, such that upon assembly the head embracing portion can be moved transverse to the longitudinal axis of the screw over the screw head.

Advantageously the cap on an outer side thereof may have a conical tool guiding collar adapted to guide a tool towards the recess and the screw head. This feature facilitates the cooperation of the cap with a tool.

In another practical embodiment of the pipe clip according to the invention the head embracing portion comprises a plurality of snap fit fingers arranged in a circular configuration, said snap-fit fingers being adapted to flex outwardly when the screw head, upon mounting, is moved towards the flange, and snap over a top portion of the screw head to retain the screw head.

In a practical embodiment of the pipe clip according to the invention the base portion of the screw retainer comprises opposite gripping formations that engage around opposite lateral edges of the first flange.

The gripping formations are possibly each formed as a profile with a substantially U-shaped cross section, the U-shape having legs that engage respective sides of the first flange. Upon mounting of the base portion to the flange, each of the gripping formations slides from the free end of the flange onto the flange along the lateral edges.

In an alternative embodiment the gripping formations are formed as legs having a hook portion at the free end, said hook portion having an inclined surface to guide the hook portion past the respective lateral edges of the first flange and the legs being flexible such that upon mounting the legs flex outwards until the respective hook portions snap behind the respective lateral edges of the first flange. Upon mounting of the base portion to the flange each of the gripping formations snap-fits from above on the flange.

In a preferred embodiment of the pipe clip according to the invention the screw retainer is made of plastics or rubber material, preferably injection moulded. The retainer may for example be made of PE, rubber or TPE.

In a possible embodiment the base portion of the screw retainer is overmolded on the first flange. To this end a pipe clip body, a pipe clip half, or a portion thereof, in particular comprising the first flange is put as an insert in the injection mould, after which the plastic or rubber material is injected in the mould to form the screw retainer.

The invention will be elucidated in the following detailed description with reference to the drawing, in which:
Fig. 1 shows in a view in perspective an embodiment of a pipe clip according to the invention,
Fig1A shows two opposing flanges of the pipe clip of Fig. 1,
Fig. 2 shows in a view in perspective another embodiment of a pipe clip according to the invention,
Fig. 3 shows in a view in perspective a first embodiment of a screw pre-assembly retainer used in the pipe clips of Figs 1 and 2,
Fig. 4 shows in a view in perspective a second embodiment of a screw pre-assembly retainer,
Fig. 5 shows in a view in perspective a third embodiment of a screw pre-assembly retainer,
Fig. 6 shows a partial cross sectional view from the front of a pipe clip half, having a fourth embodiment of a screw pre-assembly retainer, and
Fig. 7 shows a view in perspective of the embodiment of the screw pre-assembly retainer of Fig. 6.

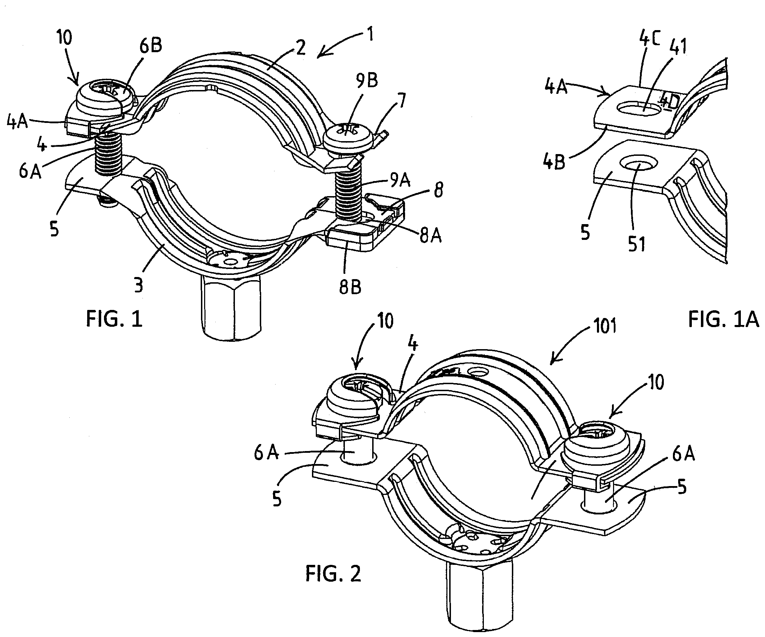

In Fig. 1 is shown a pipe clip 1 having a generally annular pipe clip body made of metal. The pipe clip body comprises a first pipe clip halve 2 and a second pipe clip halve 3 arranged opposite each other. The first pipe clip halve 2 has a first flange 4. The second pipe clip halve has a second flange 5 which is located opposite the first flange 4. In Fig. 1A the opposite flanges 4 and 5 are shown without additional components arranged on them.

The first flange 4 and the second flange 5 are interconnected by means of a tightening screw 6 having a threaded shank 6A and a head 6B. The second flange 5 has a threaded hole 51 (cf. Fig.1A) which cooperates with the male thread on the shank 6A.

The first flange 4 has a through hole 41 (cf. Fig.1A), through which the shank 6A of the screw 6 passes. The through hole 41 has a larger diameter than the screw shank 6A but a smaller diameter than the screw head 6B. A screw pre-assembly retainer 10 is arranged on the first flange 4. The screw pre-assembly retainer 10 in the embodiment shown is a plastic part.

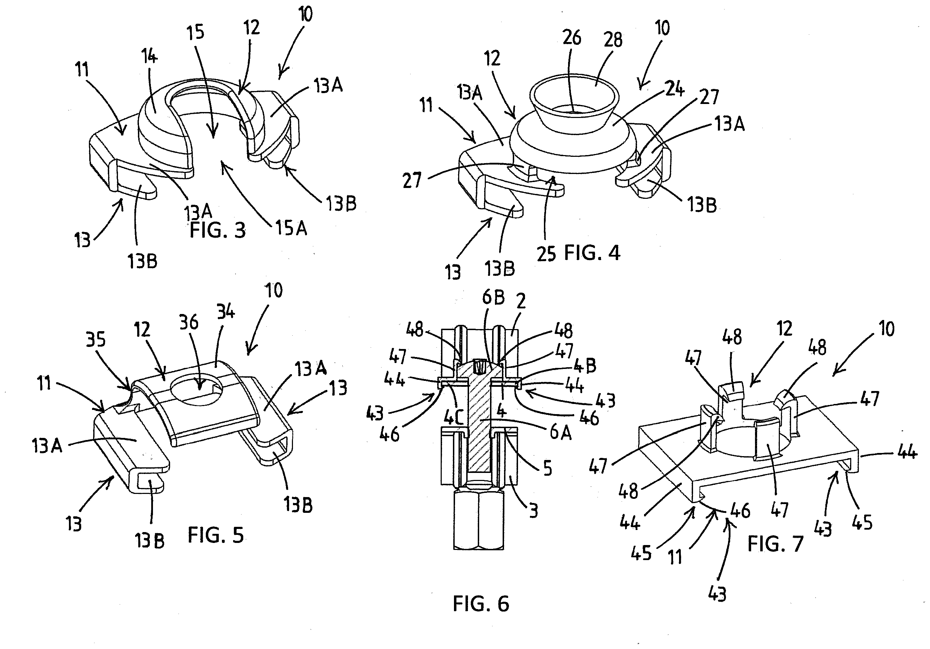

The screw pre-assembly retainer 10 is shown separately in Fig. 3 and includes a base portion 11 and a screw head embracing portion 12 attached to said base portion 11.

The base portion 11 is adapted to connect the retainer 10 to the first flange 4. It has opposite gripping formations 13 that engage around opposite lateral edges 4B, 4C (cf. Fig.1A) of the first flange 4. The gripping formations 13 are each formed as a profile with a substantially U-shaped cross section. The U-shape has legs 13A and 13B respectively that engage respective sides of the first flange 4. When the retainer 10 is mounted on the first flange 4, the respective gripping formations 13 slide from the free 4A end of the flange 4 along the lateral edges 4B and 4C, respectively, of the flange 4 to its final position.

The screw head embracing portion 12 is in the embodiment shown in Fig. 3 a generally dome shaped cap 14 that extends over the screw head 6B. The cap 14 has a slot-like recess 15 in it with an open end 15A, such that when the retainer 10 is mounted on the flange the head embracing portion 12 can be moved transverse to the longitudinal axis of the screw 6 over the screw head 6B. The width of the open end 15A of the recess 15 is smaller than the diameter of the screw head 6B, such that the head embracing portion 12 can be snapped over the head 6B and then is retained by the head 6B such that the retainer 10 cannot slide of the flange 4 again.

The recess 15 also provides a passage through which the screw head 6B can be reached with a tool such as a screwdriver or a drill bit in order to tighten or untighten the tightening screw 6.

In Fig. 4 is shown an alternative embodiment of a screw retainer 10. In this embodiment features similar to features in the embodiment of Fig. 3 are indicated with the same reference numerals. For a description of these features reference is made to the above.

The retainer 10 of Fig. 4 has a different cap 24 with regard to the cap 14 of the retainer of Fig. 3. The cap 24 in Fig. 4 is dome shaped and extends over the entire circumference. The dome is provided with a central hole 26 in the top which provides a passage through which the screw head 6B can be reached with a tool such as a screwdriver or a drill bit in order to tighten or untighten the tightening screw 6.

On an outer side of the cap 24 is provided a conical tool guiding collar 28 which is in line with the central hole 26. The tool guiding collar 28 in use facilitates guiding a tool tip for example of a screw driver or a drill bit towards the screw head 6B.

The dome shaped cap 24 is attached to an upper surface of the base portion 11 by means of opposite connecting arms 27. Between an upper surface of the base portion 11 and the dome shaped cap 24 is provided on either side a slit 25 which allows the screw head 6B to enter within the dome shaped cap. The height of the slit 25 is smaller than the height of the screw head 6B, thus the dome shaped cap 24 will deform at the connecting arms 27 upon mounting the retainer 10 on the flange 4 and snap over the screw head 6B.

In Fig. 5 is shown yet another possible embodiment of a screw retainer 10 including a base portion 11 and a head embracing portion 12.

The base portion 11 comprises gripping formations 13 similar to the embodiments described in the above. It has opposite gripping formations 13 that engage around opposite lateral edges 4B, 4C (cf. Fig.1A) of the first flange 4. The gripping formations 13 are each formed as a profile with a substantially U-shaped cross section. The U-shape has legs 13A and 13B respectively that engage respective sides of the first flange 4.

The head embracing portion 12 has a cap 34 that is formed as a canopy that is only connected on one end 35 thereof to the base portion 11. Said end 35 forms a bridge portion that interconnects the gripping formations 13 of the base portion 11.

The cap 34 is provided with hole 36 with a closed contour, which forms a passage for a tool such as a screw driver or a drill bit in order to allow engagement of the screw head 6B by said tool.

The canopy shaped cap 34 is curved such that when the retainer 10 is mounted on the first flange 4, the distance of its free end 37 with respect to a surface 4D (cf. Fig. 1A) of the first flange 4, that faces away from the second flange 5, is smaller than the height of the screw head 6B. When the retainer 10 is mounted on the first flange 4 the free end 37 of the cap 34 will initially be guided over the screw head 6B and the cap 34 will deform in a tilting manner and snap over the screw head 6B.

In Fig. 6 is illustrated another embodiment of a screw retainer 10 mounted on a first flange 4. In Fig 7 this particular screw retainer 10 is shown separately. Also in this embodiment the screw retainer 10 has a base portion 11 and a head embracing portion 12.

The base portion 11 of the screw retainer comprises opposite gripping formations 43 that engage around opposite lateral edges 4B, 4C of the first flange 4. In particular the gripping formations 43 are formed as legs 44 having a hook portion 45 at the free end. The hook portion 45 has an inclined surface 46 to guide the hook portion 45 past the respective lateral edges 4B, 4C of the first flange 4, when the screw retainer 10 is moved from the side faced by flange surface 4D onto the flange. The legs 44 are flexible such that upon mounting of the screw retainer 10 on the first flange 4 the legs 44 flex outwards until the respective hook portions 45 snap behind the respective lateral edges 4B, 4C of the first flange 4.

The head embracing portion 12 comprises a plurality of snap fit fingers 47 arranged in a circular configuration. The snap-fit fingers 47 are adapted to flex outwardly when the screw head 6B, upon mounting, is moved towards the surface 4D of the first flange 4, and snap over a top portion of the screw head 6B with hook portions 48 to retain the screw head 6B.

The embodiments of the pre-assembly screw retainer 10 as described and shown in the above are preferably made of a plastics or a rubber material. Examples of suitable material may be TPE, PE or rubber. Advantageously the screw retainers 10 are made by injection moulding. It should however be noted that it is also conceivable to make similar screw retainers of another suitable material, such as for example spring steel or another suitable metal.

In Fig. 1 the pipe clip has opposite flanges 7 and 8 on the radially opposite side of the pipe clip body. The flanges 7 and 8 can be tightened together by a tightening screw 9. The flange 7 has a slot that is open on one end at the outer edge 7A of the flange 7. A screw shank 9A can be inserted in the slot after which the flange portions adjacent the slot engage the screw head 9B. The screw shank 9A is screwed in a female fastening element 8A that is attached to the flange 8 by means of an attachment shoe 8B. Said female fastening 8A is pivotable with respect to the flange 8, such that the screw 9 can swivel with its head 9B outwards until the head 9B is moved beyond the edge 7A of the flange 7. This is as such a mechanism known in the art. In this specific embodiment the tightening screw 6 and the first and second flanges 4, 5 act as a hinge when the pipe clip 1 is arranged around a pipe and closed. In this pipe clip 1 the main purpose of the screw retainer 10 is to hold the screw head 6B against or in the vicinity of the first flange 4, such that the distance between the head 6B and the portion where the screw shank 6A engages the second flange 5 is kept as large as possible. Thereby the hinge function of the pipe clip 1 at the side where the first and second flanges 4, 5 are located, is facilitated.

In Fig. 2 is shown another pipe clip 101, which has on either side opposing first and second flanges 4, 5. The first flange 4 of each pair is provided with the preassembly screw retainer 10 of Fig. 3. In this specific pipe clip one of the screws 6 must be released from the corresponding second flange 5 in order to be able to open the pipe clip 101 and arrange it around a pipe. The other screw 6 functions with the corresponding first and second flanges 4, 5 as a hinge. After the pipe clip 101 has been arranged and closed around the pipe the released screw 6 can be screwed into the threaded hole in the flange 5 again.

Thus in this specific embodiment the screw retainer 10 at the screw that is not released has the main purpose to hold the screw head 6B against or in the vicinity of the first flange 4, such that the distance between the head 6B and the portion where the screw shank 6A engages the second flange 5 is kept as large as possible, whereby the mentioned hinge function is facilitated.

The other screw retainer 10 on this pipe clip of Fig. 2 has the main purpose of an anti-loss feature. It retains the screw 6 on the flange 4, when its shank 6A is released from the second flange 5.

As is apparent from the above, the screw retainer 10 according to the invention as disclosed herein is a part that is capable to perform two functions, i.e. that of an anti-loss feature and of a distance holder.

## Claims

1. Pipe clip (1) comprising a substantially annular metal pipe clip body, said pipe clip body having a first flange (4) and a second flange (5) opposing the first flange (4), and a tightening screw (6) associated with said first (4) and second (5) flanges to tighten said flanges (4, 5) towards each other, said tightening screw (6) having a head (6B) and a threaded shank (6A), said first flange (4) in a closed state of the pipe clip (1) being engaged by said head (6B) and having a through hole (41) with a smaller diameter than the screw head (6B), wherein said threaded shank (6A) passes through said through hole (41), and said second flange (5) having a female fastening element (51) to cooperate with said threaded shank (6A), and said pipe clip (1) including a screw pre-assembly retainer (10) to retain the screw (6) relative to said first flange (4), **characterized in that** said screw pre-assembly retainer (10) comprises a base portion (11) and at least one screw head embracing portion (12) attached to said base portion (11), said base portion (11) being connected to a lateral edge (4B, 4C) of the first flange (4) and said head embracing portion (12) embracing at least a portion of the screw head (6B) so as to restrain axial movement of the screw head (6B) away from the first flange (6).

2. Pipe clip (1) according to claim 1, wherein the head embracing portion (12) is a cap (14, 24, 34) that extends over the screw head (6B) and is provided with a passage (15, 26, 36) through which the screw head (6B) can be reached with a tool such as a screwdriver or a drill bit in order to tighten or untighten the tightening screw (6).

3. Pipe clip (1) according to claim 2, wherein the cap (24) is dome shaped.

4. Pipe clip (1) according to claim 2, wherein the cap (34) is formed as a canopy that is only connected on one end (35) thereof to said base portion (11).

5. Pipe clip (1) according to any of claims 2 - 4, wherein said passage is a hole (36) with a closed contour.

6. Pipe clip (1) according to any of claims 2 - 4, wherein said passage is a slot-like recess (15) with an open end (15A) in it, such that upon assembly the head embracing portion (12) can be moved transverse to the longitudinal axis of the screw (6) over the screw head (6B).

7. Pipe clip (1) according to any of the claim 2 - 6, wherein the cap (24) on an outer side thereof has a conical tool guiding collar (28) adapted to guide a tool towards the recess (26) and the screw head (6B).

8. Pipe clip (1) according to claim 1, wherein said head embracing portion (12) comprises a plurality of snap fit fingers (47) arranged in a circular configuration, said snap-fit fingers (47) being adapted to flex outwardly when the screw head (6B), upon mounting, is moved towards the flange (4), and snap over a top portion of the screw head (6B) to retain the screw head (6B).

9. Pipe clip (1) according to any of the preceding claims, wherein the base portion (11) of the screw retainer (10) comprises opposite gripping formations (43) that engage around opposite lateral edges (4B, 4C) of the first flange (4).

10. Pipe clip (1) according to claim 9, wherein the gripping formations (43) are each formed as a profile with a substantially U-shaped cross section, the U-shape having legs (44) that engage respective sides of the first flange (4).

11. Pipe clip (1) according to claim 9, wherein the gripping formations (43) are formed as legs (44) having a hook portion (45) at the free end, said hook portion (45) having an inclined surface (46) to guide the hook portion (45) past the respective lateral edges (4B, 4C) of the first flange (4) and the legs (44) being flexible such that upon mounting the legs (44) flex outwards until the respective hook portions (45) snap behind the respective lateral edges (4B, 4C) of the first flange (4).

12. Pipe clip (1) according to any of the preceding claims, wherein the screw retainer (10) is made of plastics or rubber material, preferably injection moulded.

13. Pipe clip (1) according to claim 12, wherein the base portion (11) of the screw retainer (10) is overmolded on the first flange (4).

## Patentansprüche

1. Rohrschelle (1), umfassend einen im Wesentlichen ringförmigen metallischen Rohrschellenkörper, wobei der Rohrschellenkörper einen ersten Flansch (4) und einen zweiten Flansch (5), der dem ersten Flansch (4) gegenüberliegt, aufweist, und eine Spannschraube (6), die zu dem ersten (4) und dem zweiten (5) Flansch gehört, um die Flansche (4, 5) zueinander zu spannen, wobei die Spannschraube (6) einen Kopf (6B) und einen Gewindeschaft (6A) aufweist, wobei der erste Flansch (4) im geschlossenen Zustand der Rohrschelle (1) von dem Kopf (6B) in Eingriff genommen wird und eine Durchgangsbohrung (41) mit einem geringeren Durchmesser aufweist als der Schraubenkopf (6B), wobei der Gewindeschaft (6A) durch die Durchgangsbohrung (41) verläuft, und wobei der zweite Flansch (5) ein Buchsenbefestigungselement (51) aufweist, um mit dem Gewindeschaft (6A) zusammenzuwirken, und die Rohrschelle (1) eine Vormontageschraubensicherung (10) aufweist, um die Schraube (6) in Bezug auf den ersten Flansch (4) zu sichern, **dadurch gekennzeichnet, dass** die Vormontageschraubensicherung (10) einen Basisabschnitt (11) und mindestens einen an dem Basisabschnitt (11) befestigten Schraubenkopfumklammerungsabschnitt (12) umfasst, wobei der Basisabschnitt (11) mit einer seitlichen Kante (4B, 4C) des ersten Flansches (4) verbunden ist und der Kopfumklammerungsabschnitt (12) zumindest einen Teil des Schraubenkopfes (6B) umklammert, um eine axiale Bewegung des Schraubenkopfes (6B) von dem ersten Flansch (6) weg einzuschränken.

2. Rohrschelle (1) nach Anspruch 1, wobei es sich bei dem Kopfumklammerungsabschnitt (12) um eine Kappe (14, 24,34) handelt, die sich über den Schraubenkopf (6B) erstreckt und mit einem Durchgang (15, 26, 36) versehen ist, über den der Schraubenkopf (6B) mit einem Werkzeug wie etwa einem Schraubenzieher oder einem Bohrer erreicht werden kann, um die Spannschraube (6) festzuziehen oder zu lösen.

3. Rohrschelle (1) nach Anspruch 2, wobei die Kappe (24) kuppelförmig ist.

4. Rohrschelle (1) nach Anspruch 2, wobei die Kappe (34) als Haube ausgebildet ist, die nur an einem Ende (35) davon mit dem Basisabschnitt (11) verbunden ist.

5. Rohrschelle (1) nach einem der Ansprüche 2-4, wobei es sich bei dem Durchgang um ein Loch (36) mit einer geschlossenen Kontur handelt.

6. Rohrschelle (1) nach einem der Ansprüche 2-4, wobei es sich bei dem Durchgang um eine schlitzartige Vertiefung (15) mit einem offenen Ende (15A) darin handelt, sodass beim Befestigen der Kopfumklammerungsabschnitt (12) quer zu der Längsachse der Schraube (6) über den Schraubenkopf (6B) bewegt werden kann.

7. Rohrschelle (1) nach einem der Ansprüche 2-6, wobei die Kappe (24) an einer Außenseite davon einen konischen Werkzeugführungsbund (28) aufweist, der dazu ausgelegt ist, ein Werkzeug zu der Vertiefung (26) und dem Schraubenkopf (6B) zu führen.

8. Rohrschelle (1) nach Anspruch 1,
wobei der Kopfumklammerungsabschnitt (12) eine Mehrzahl von Schnappverbindungszapfen (47) umfasst, die in einer kreisförmigen Ausgestaltung angeordnet sind, wobei die Schnappverbindungszapfen (47) dazu ausgelegt sind, sich nach außen zu biegen, wenn der Schraubenkopf (6B) bei der Befestigung zu dem Flansch (4) bewegt wird, und über einen oberen Abschnitt des Schraubenkopfs (6B) zu schnappen, um den Schraubenkopf (6B) zu sichern.

9. Rohrschelle (1) nach einem der vorstehenden Ansprüche, wobei der Basisabschnitt (11) der Schraubensicherung (10) einander gegenüberliegende Greifformationen (43) aufweist, die einander gegenüberliegende seitliche Kanten (4B, 4C) des ersten Flansches (4) in Eingriff nehmen.

10. Rohrschelle (1) nach Anspruch 9, wobei die Greifformationen (43) jeweils als Profil mit einem im Wesentlichen U-förmigen Querschnitt ausgebildet sind, wobei die U-Form Beine (44) umfasst, die die entsprechenden Seiten des ersten Flansches (4) in Eingriff nehmen.

11. Rohrschelle (1) nach Anspruch 9, wobei die Greifformationen (43) als Beine (44) mit einem Hakenabschnitt (45) an dem freien Ende ausgebildet sind, wobei der Hakenabschnitt (45) eine geneigte Oberfläche (46) aufweist, um den Hakenabschnitt (45) an den entsprechenden seitlichen Kanten (4B, 4C) des ersten Flansches (4) vorbeizuführen, und die Beine (44) flexibel sind, sodass sich bei der Befestigung die Beine (44) nach außen biegen, bis die entsprechenden Hakenabschnitte (45) hinter die entsprechenden seitlichen Kanten (4B, 4C) des ersten Flansches (4) schnappen.

12. Rohrschelle (1) nach einem beliebigen der vorstehenden Ansprüche, wobei die Schraubensicherung (10) aus Kunststoff oder Gummimaterial hergestellt ist, vorzugsweise spritzgegossen.

13. Rohrschelle (1) nach Anspruch 12, wobei der Basisabschnitt (11) der Schraubensicherung (10) an dem ersten Flansch (4) umspritzt ist.

## Revendications

1. Collier de fixation (1) pour tuyau comprenant un corps de collier de fixation pour tuyau métallique sensiblement annulaire, ledit corps de collier de fixation pour tuyau ayant une première bride (4) et une seconde bride (5) opposée à la première bride (4) et une vis (6) de serrage associée auxdites première bride (4) et seconde bride (5) pour serrer lesdites brides (4, 5) l'une vers l'autre, ladite vis (6) de serrage ayant une tête (6B) et une tige filetée (6A), ladite première bride (4), dans un état fermé du collier de fixation (1) pour tuyau, étant engagée par ladite tête (6B) et ayant un trou (41) traversant de plus petit diamètre que la tête (6B) de la vis, dans lequel ladite tige filetée (6A) traverse ledit trou (41) traversant et ladite seconde bride (5) ayant un élément de fixation femelle (51) pour coopérer avec ladite tige filetée (6A), et ledit collier de fixation (1) pour tuyau comprenant un dispositif de retenue (10) de pré-assemblage de vis pour retenir la vis (6) par rapport à ladite première bride (4), **caractérisé en ce que** ledit dispositif de retenue (10) de pré-assemblage de vis comprend une partie de base (11) et au moins une partie d'embranchement (12) de tête de vis fixée à ladite partie de base (11), ladite partie de base (11) étant reliée à un bord latéral (4B, 4C) de la première bride (4) et ladite partie d'embranchement (12) de tête embranchant au moins une partie de la tête (6B) de la vis de manière à empêcher un mouvement axial de la tête (6B) de la vis dans une direction s'éloignant de la première bride (6).

2. Collier de fixation (1) pour tuyau selon la revendication 1, dans lequel la partie d'embranchement (12) de tête est un capuchon (14, 24, 34) qui s'étend sur la tête (6B) de la vis et est pourvu d'un passage (15, 26, 36) à travers lequel la tête (6B) de la vis peut être atteinte avec un outil tel qu'un tournevis ou un foret pour serrer ou desserrer la vis (6) de serrage.

3. Collier de fixation (1) pour tuyau selon la revendication 2, dans lequel le capuchon (24) est en forme de dôme.

4. Collier de fixation (1) pour tuyau selon la revendication 2, dans lequel le capuchon (34) est formé comme un auvent qui n'est relié qu'à une extrémité (35) de celui-ci à ladite partie de base (11).

5. Collier de fixation (1) pour tuyau selon l'une quelconque des revendications 2 à 4, dans lequel ledit passage est un trou (36) avec un contour fermé.

6. Collier de fixation (1) pour tuyau selon l'une quelconque des revendications 2 à 4, dans lequel ledit passage est un évidement (15) en forme de fente avec une extrémité ouverte (15A) dans celui-ci, de sorte que, lors du montage, la partie d'embranchement (12) de tête peut être déplacée transversalement à l'axe longitudinal de la vis (6) sur la tête (6B) de la vis.

7. Collier de fixation (1) pour tuyau selon l'une quelconque des revendications 2 à 6, dans lequel le capuchon (24) présente, sur son côté extérieur, un collier de guidage (28) d'outil conique adapté à guider un outil vers l'évidement (26) et la tête (6B) de la vis.

8. Collier de fixation (1) pour tuyau selon la revendication 1, dans lequel ladite partie d'embranchement (12) de tête comprend une pluralité de doigts (47) d'encliquetage disposés dans une configuration circulaire, lesdits doigts (47) d'encliquetage étant adaptés pour se fléchir vers l'extérieur lorsque la tête (6B) de la vis est déplacée vers la bride (4), lors du montage, et s'encliquète sur une partie supérieure de la tête (6B) de la vis pour retenir la tête (6B) de la vis.

9. Collier de fixation (1) pour tuyau selon l'une quelconque des revendications précédentes, dans lequel la partie de base (11) du dispositif de retenue (10) de vis comprend des formations d'accrochage (43) opposées qui s'engagent autour des bords latéraux (4B, 4C) opposés de la première bride (4).

10. Collier de fixation (1) pour tuyau selon la revendication 9, dans lequel les formations d'accrochage (43) sont formées chacune sous la forme d'un profil avec une section transversale sensiblement en forme de U, la forme en U ayant des branches (44) qui s'engagent dans des côtés respectifs de la première bride (4).

11. Collier de fixation (1) pour tuyau selon la revendication 9, dans lequel les formations d'accrochage (43) sont formées en tant que branches (44) ayant une partie de crochet (45) à l'extrémité libre, ladite partie de crochet (45) ayant une surface inclinée (46) pour guider la partie de crochet (45) au-delà des bords latéraux (4B, 4C) respectifs de la première bride (4) et les branches (44) étant souples de sorte que, lors du montage, les branches (44) fléchissent vers l'extérieur jusqu'à ce que les parties de crochet (45) respectives s'encliquètent derrière les bords latéraux (4B, 4C) respectifs de la première bride (4).

12. Collier de fixation (1) pour tuyau selon l'une quelconque des revendications précédentes, dans lequel le dispositif de retenue (10) de vis est réalisé en matières plastiques ou en caoutchouc, de préférence moulé par injection.

13. Collier de fixation (1) pour tuyau selon la revendication 12, dans lequel la partie de base (11) du dispositif de retenue (10) de la vis est surmoulée sur la première bride (4).
